(19) Europäisches Patentamt
European Patent Office
Office européen des brevets

(11) Publication number: **0 159 783**
**A2**

# (12) EUROPEAN PATENT APPLICATION

(21) Application number: 85301432.2

(22) Date of filing: 01.03.85

(51) Int. Cl.$^4$: **B 01 D 53/22**

(30) Priority: 02.03.84 JP 39976/84

(43) Date of publication of application: 30.10.85
Bulletin 85/44

(84) Designated Contracting States: FR GB NL

(71) Applicant: MITSUBISHI CHEMICAL INDUSTRIES LIMITED, 5-2, Marunouchi 2-chome Chiyoda-ku, Tokyo 100 (JP)

(72) Inventor: Okada, Munehisa, 2-2-4 Horikiri, Katsushika-ku Tokyo (JP)
Inventor: Konno, Isao, 3-22-2 Nagatsuda Midori-ku, Yokohama-shi Kanagawa-ken (JP)
Inventor: Uchida, Shinzi, 5-6-141, Tsutsujigaoka Midori-ku, Yokohama-shi Kanagawa-ken (JP)

(74) Representative: Woods, Geoffrey Corlett et al, J.A. KEMP & CO. 14 South Square Gray's Inn, London WC1R 5EU (GB)

## (54) Process for separating water vapour from a gaseous mixture containing water vapour and methane.

(57) A process for separating water vapour from a gaseous mixture containing water vapor and methane comprises contacting a membrane consisting essentially of a urethane-amino acid copolymer with the gaseous mixture.

EP 0 159 783 A2

ACTORUM AG

DESCRIPTION

TITLE: PROCESS FOR SEPARATING WATER VAPOUR FROM A GASEOUS MIXTURE CONTAINING WATER VAPOUR AND METHANE

The present invention relates to a process for separating water vapour from a gaseous mixture containing water vapour and methane.

In order to obtain a product, in which a specified component content therein is increased as compared to that in a starting material, from the starting material containing the specified component, hitherto distillation has been carried out in the case of a liquid mixture, and extraction has been carried out in the case of a solid mixture. In the case of a gaseous mixture, separation by deep cooling, separation by adsorption-desorption, wet process or membrane has been carried out. For instance, in the case of a mixture of solid and liquid, filtration is actually carried out. In a process for separation by membrane, a variety of dialysing membranes, ultrafiltering membranes and reverse osmotic membrane is used as the water-solute permeating membrane and also ion-exchanging membrane is used as the water-solute permeating membrane. However, membranes for separating gaseous mixtures, membranes for separating mixtures of organic liquids and membranes for separating biological substances are mostly in study or in development and there are very few cases of actual application

of those membranes.

There are problems in separation by distillation because of the large consumption of energy and the difficulty of separating a mixture of two components of which one component has a boiling point in the vicinity of the boiling point of the other component. Although processes of separating a gaseous mixture or a liquid mixture by using a separatory membrane have been tried, any satisfactory membrane for that purpose has not been obtained.

Accordingly, in the case of achieving the development of a membrane material which can separate and purify a gas or a liquid from a gaseous mixture or a liquid mixture, the effects of such a development will be considered as follows.

(1) Renovation of process for separation and purification in chemical industry including,

(a) Compacting of chemical plants, and dissolution of problems in conditions of plant location thereby, and

(b) Effect of energy saving due to the energy for separation by membrane of less than one tenth of that of the conventional process, and

(2) Realization of clean social environment without social pollution, effected by treatment of waste water and waste gases.

On the other hand, there are few membranes for separating gaseous mixture which are now in development and have sufficient performance for the purpose.

The factors of the membrane for separating gaseous mixture are as follows.

The membrane for separating a gaseous mixture should have a large ratio of the permeation rate of a gas as one component of the gaseous mixture to the permeation rate of the other gas as the other component of the gaseous mixture, and should have a large selectivity of gases (the ratio of separation), and in addition, it is demanded that the permeation rate of the gas through the membrane is large enough. The magnitude of the permeation rate of a gas through a membrane is defined by the amount (volume) of the gas permeating through the membrane per unit surface area of the membrane, per unit time and per unit pressure difference between the inside and the outside of the membrane, and in the case where the surface area, the time and the pressure-difference are respectively fixed to certain values, the permeation rate of a gas through the membrane depends on the property of the membrane material concerning the permeability to the gas and also on the thickness of the membrane substantially participating in the separation of the gaseous mixture.

Accordingly, although it is possible to obtain a high permeation rate by preparing a membrane as thin as possible with a material which is permeable to the gas, there are still problems that generally a material permeable to a gas is low in selectively separating a gas and the essential gas-separating performance of a membrane is reduced in the case where the

thickness of the membrane is reduced over a certain limit. Namely, it is difficult that the separatory property and the permeability of a membrane consist together.

In order to solve the above-mentioned problems, it is necessary to make a challenge to producing a super-thin membrane while using a material high in separatory property even though the permeability of the membrane to the gas is lost to a certain extent.

At present, as the process for preparing a membrane showing a high permeation rate to gases, the following four processes may be enumerated.

1) Preparation of an asymmetric membrane comprising a uniform layer and another uniform layer,
2) Preparation of a composite membrane comprising uniform and ultra-thin layers,
3) Development of liquid membranes and transportation-accelerating membranes and
4) Preparation of hollow fibrous modules.

The membrane prepared in (1) is an asymmetric membrane comprising a compact layer and a porous layer, however, it has demerits of being unable to obtain any solvent system suitable for preparing such a membrane depending on the properties of the material for the layers and of the reduction of the separatory performance in the case where the thickness of the compact layer is less than 0.1 μ.

The composite membrane of (2) may take various

composite forms and shapes. For instance, there are methods such as (a) of superposing an uniform and ultra-thin layer made of another material on a porous layer as the supporting layer (b) of polymerizing a material in a form of a thin membrane on the surface of a porous membrane made of another material, thereby providing the separatory property and (c) of coating a material low in the separatory property on the surface of a porous membrane made of a material high in the separatory property.

Of the above-mentioned three methods, a high technique for preparing membrane is required in the method(a), and the material for preparing an ultra-thin membrane of less than 0.1 μ in thickness and making a composite membrane therefrom will be restricted.

In the method(b), since defects are apt to be caused unless the thickness of the membrane obtained by the polymerization is more than 10 times of the pore-diameter of the porous membrane, although depending on the pore-diameter, it is difficult to provide the separatory property and accordingly, it is difficult to provide the separatory property by making the thickness of the polymerized and piled membrane on the porous membrane to less than 0.1 μ.

The method(c) is an interesting method because of the high separatory property of the membrane after coating and the considerably high permeation rate of gases, however, there will be a limitation in improvement of the permeation rate

so far as a material for membrane high in the separatory property and low in the permeation rate of gases is used as the base material.

The liquid membrane or transportation-accelerating membrane (3) is a membrane of a trial for providing both the high separatory property and the high permeability by using a liquid or by fixing a reactive substance. However, such a liquid membrane has not been put into practice at present because of the low separatory property thereof. Any transportation-accelerating membrane has not been put into practice because of the lack of stability thereof.

The membrane prepared by the process (4) has been put into practice for the purpose of increasing the surface of the membrane. Since the main purpose of the process is to increase the amount of permeation, a systemization is effected by increasing the surface area of the membrane and increasing the number of bundles of the hollow fibers. Since the material for preparing the hollow fibers is limited, the maintenance of the membrane requires much efforts.

In the method of separating gaseous mixture, which is actually carried out at present, a thin membrane is coated on the surface of the membrane in order to maintain the separatory property without losing the permeability because of the properties of the material for the membrane (namely, the permeability and the separatory property are in the opposite relationship). Accordingly, such a membrane shows an unstable quality of

being unable to sufficiently exhibit the separatory property and of being apt to undergo the occurrence of pinholes because of the thin membrane.

Accordingly, in the case where a membrane is to be prepared by using a material having the separatory property without losing the permeability thereof, the high polymeric material itself should not lose the permeability thereof.

On the other hand, a gaseous mixture containing water vapour and methane generates largely from the industrial sources such as plants of chemical industry, the biological sources such as methane fermentation and the mineral sources such as underground resources. Water vapor and methane are separated from the gaseous mixture and the thus separated gaseous methane is recovered to be utilized.

Although as the existing process for separation of water vapour from such a gaseous mixture, a process for cooling the gaseous mixture by using a cooling trap, a process for drying the gaseous mixture by using a desiccant and a wet process in which the gaseous mixture is passed through an absorbent liquid for water vapour have been put into practice. However, these processes are large in scale of the apparatus therefor, and are complicated in operation and in exchange of the desiccant or the absorbent liquid. Accordingly, the development of an effective and economical process by which either water vapour or methane is selectively separated from a gaseous mixture has been keenly demanded.

In an aspect of the present invention, there is provided a process for separating water vapour from a gaseous mixture containing water vapour and methane, comprising contacting the gaseous mixture with a separatory membrane comprising a copolymer prepared by introducing molecules of polyurethane into molecular chains of polyamino acid.

The characteristic features of the separatory membrane used in the process for separating water vapour from the gaseous mixture containing water vapour and methane are:

1) the membrane retains its separatory property without losing the gas permeability thereof and
2) the material of the membrane is heat-resistant, elastic and adhesive and excellent in mechanical specificities as a membrane.

Accordingly, the process for separating water vapour from the gaseous mixture containing water vapour and methane of the present invention, wherein the separatory membrane is used, makes the apparatus compact and rational thereby using a smaller amount of energy, and is the more economical process than the conventional processes.

The membrane used for separating water vapour from the gaseous mixture containing water vapour and methane of the present invention, which comprises polyamino acid-polyurethane copolymer, is prepared, for instance, from a copolymer

produced by a process disclosed in Japanese Patent Application Laying-Open No. 58-58103. Namely, the membrane for use in the present invention comprises a copolymer produced by introducing molecules of polyurethane into molecular chains of polyamino acid. More in detail, the copolymer is produced by copolymerizing urethane prepolymer having isocyanate group at the molecular end thereof and an α-amino acid N-carboxyanhydride represented by the following formula (I), which has been produced by reacting phosgene with the amino acid or an ester of the amino acid, in the presence of an amine, and the membrane is prepared from the thus produced copolymer.

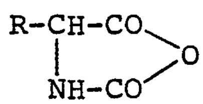

(I)

wherein R represents hydrogen atom or monovalent organic residue.

The weight ratio of the α-amino acid N-carboxyanhydride represented by the formula (I) to the urethane prepolymer is in a range of from 95:5 to 10:90, preferably in a range of from 90:10 to 10:90, and more preferably from 80:20 to 20:80.

The membrane may contain an organic substance or an inorganic substance as the third component so far as the specific properties of the membrane as the separatory membrane is not lost by the introduction of the third component.

The method for preparing the membrane is not specifically limited, and a known method of a solution casting may be used. Namely, asymmetric membrane, composite membrane and uniform membrane may be prepared by the known method. Particularly, the membrane of the present invention is formed by the material which does not reduce the permeating rate of water vapour passing through the membrane, namely, even in the uniform membrane of 1 to 500 μ in thickness, the permeability of water vapour is not reduced in addition to the separating property of the membrane. Accordingly, the membrane prepared by such a method is suitably used. The membrane may take every form such as flat fibrous form, spiral fibrous form, tubular fibrous form and hollow fibrous form.

The separation of a gaseous mixture containing water vapour and methane according to the present invention is carried out while using the membrane by a conventional process which use a separatory membrane for separating gas. The process according to the present invention is a process which uses a membrane excellent in selective permeability to water vapour and in mechanical strength and easy to handle for obtaining water vapour at a higher ratio from the gaseous mixture containing water vapour and methane and accordingly, the process can be used in many fields.

The fields to which the process of the present invention for separating water vapour from a gaseous mixture containing water vapour and methane can be applied are the industrial sources of

generating the gaseous mixture such as industrial chemical plants, the biological sources such as methane fermentation and the mineral sources such as underground resources, and the process is suitable for separating the gaseous mixture into water vapour and methane, thereby recovering and utilizing methane.

The present invention will be explained more in detail while referring to the following non-limitative Examples, the percentage in Examples meaning the percentage by weight.

EXAMPLE 1

Into a solution of 85 g of γ-methyl-L-glutamate N-carboxyanhydride and 85 g of a urethane-prepolymer [a reaction product of isophorone diisocyanate and polytetramethylene glycol (made by Mitsubishi Chemical Industries Ltd., hereinafter referred to as PTMG 2000), in a ratio of NCO to OH of 2:1] in 600 g of a mixed solvent of dimethylformamide and dioxane of 7:3 in volume ratio, a solution of 1.4 g of hydrated hydrazine in 85 g of a mixed solvent of dimethylformamide and dioxane of 7:3 in volume ratio was added, and the thus formed mixture was reacted for 2 hours at 30°C, and thereafter, a solution of 4.6 g of triethylamine in 41.4 g of a mixed solvent of dimethylformamide and dioxane of 7:3 in volume ratio was added to the reaction mixture and the thus prepared mixture was reacted for 2 hours at 30°C to obtain a copolymer of poly-γ-methyl-L-glutamate-N-carboxylic acid and polyurethane, which showed a viscosity of 18688 cps at 25°C under agitation of 0.5 rpm as determined by B-type viscometer.

The thus obtained copolymer was uniformly dissolved in a mixed solvent of dimethylformamide and dioxane of 7:3 in volume ratio to form a uniform solution of a solid content of 18.1 % and of a viscosity of 8800 cps (0.5 RPM) at 25°C, the operation of dissolution having been carried out at a temperature of lower than 40°C.

The thus obtained solution was poured over a glass plate and formed into a membrane while using a doctor knife of 250μ in thickness, and the thus formed membrane was left at room temperature for 90 min on the glass plate and after drying the membrane under vacuum condition at room temperature for 12 hours together with the glass plate, the thus treated membrane was immersed in water together with the glass plate. Although the membrane exfoliated by itself from the glass plate, the membrane was continuously immersed in water, and after 12 hours of immersion, the membrane was taken out from water, dried in open air and then subjected to vacuum drying.

The permeation rate of water vapour or gaseous methane through the thus prepared membrane made of the block-copolymer of poly-γ-methyl-L-glutamate N-carboxylic acid and poly-urethane was determined as follows.

The permeation rate of water vapour through the thus prepared membrane, expressed by $R_{H_2O}$ ($cm^3/cm^2 \cdot sec \cdot cmHg$), was obtained by measuring the permeability of water vapour through the membrane at 38°C and RH of 90 % according to the method of ASTM-E-96 and calculating on the thus obtained value of the permeability.

The permeation rate of methane through the membrane, expressed by $R_{CH_4}$ ($cm^3/cm^2 \cdot sec \cdot cmHg$), was obtained by measuring the amount of gaseous methane passed through an equipressure cell provided with the membrane and kept at 38°C by gas-chromatography, and determining the amount of gaseous methane by using a calibration curve. The results are shown in Table 1.

EXAMPLES 2 to 4:

By the same procedures as in Example 1 except for using the combination of a ferro plate and a doctor knife of 300 μ in thickness in Example 2, a ferro plate and a doctor knife of 500 μ in thickness in Example 3 and a glass plate and a doctor knife of 500 μ in thickness in Example 4 instead of the combination of a glass plate and a doctor knife of 250 μ in thickness in Example 1, the respective membranes were prepared in Examples 2 to 4, the results being also shown in Table 1.

EXAMPLE 5:

After pouring the solution over the ferro plate and forming a membrane by the same procedures as in Example 3, the membrane was dried in a gear-oven for 30 min at 60°C and further for 30 min at 80°C, and then immersed into water for 12 hours. Thereafter, the membrane was taken out from water and dried for 30 min in a gear-oven at 60°C. The results are shown also in Table 1.

Table 1

| Example No. | Thickness of membrane of specimen (μ) | Permeation rate ($cm^3/cm^2 \cdot sec \cdot cmHg$) | | Ratio of Permeation rate |
|---|---|---|---|---|
| | | $R_{H_2O}$ 1) | $R_{CH_4}$ 2) | $R_{H_2O}$ : $R_{CH_4}$ |
| 1 | 12 | $1.1x10^{-3}$ | $1.2x10^{-6}$ | 868 |
| 2 | 19 | $8.0x10^{-4}$ | $1.4x10^{-6}$ | 567 |
| 3 | 48 | $4.1x10^{-4}$ | $3.3x10^{-7}$ | 1199 |
| 4 | 53 | $3.9x10^{-4}$ | $2.8x10^{-7}$ | 1400 |
| 5 | 39 | $4.7x10^{-4}$ | $3.6x10^{-7}$ | 1324 |

Notes: 1) determined by the method in ASTM-E-96.

2) determined by the equipressure method while using a permeation cell.

EXAMPLE 6:

After installing the membrane prepared in Example 1 into a permeation cell made of a metal, the cell was kept in a thermostat at 60°C. Separately, gaseous methane was introduced into an autoclave which contained water at 60°C, and the thus prepared gaseous mixture of methane and water vapour under a total pressure of 2.9 $kg/cm^2$ was introduced into the permeation cell via a heat-insulating tube.

The thus permeated gaseous mixture through the membrane in the cell was introduced into a Karl-Fischer-type micro-moisture meter to measure the moisture content of the gaseous mixture, and the methane content in the permeated gaseous mixture was

measured by gas-chromatography after desiccating the gaseous mixture by a desiccant.

The results are shown below.

1) $R_{H_2O} = 9.4 \times 10^{-4}$ $cm^3/cm^2 \cdot sec \cdot cmHg$,

2) $R_{CH_4} = 5.6 \times 10^{-6}$ $cm^3/cm^2 \cdot sec \cdot cmHg$ and

3) $R_{H_2O}/R_{CH_4} = 161$

CLAIMS

1. A process for separating water vapour from a gaseous mixture containing water vapour and methane, which process comprises contacting a membrane consisting essentially of a urethane-amino acid copolymer with the gaseous mixture.

2. A process according to claim 1, wherein said copolymer has been obtained by copolymerizing, in the presence of an amine, an $\alpha$-amino acid N-carboxyanhydride with a urethane-prepolymer having a free isocyanate group.